# EUROPÄISCHE PATENTSCHRIFT

(11) **EP 0 519 155 B1**
(45) Veröffentlichungstag und Bekanntmachung des Hinweises auf die Patenterteilung: **09.10.1996**
(21) Anmeldenummer: 92102046.7
(22) Anmeldetag: 07.02.1992
(51) Int. Cl.: C04B 28/02, C04B 14/06

(54) **Verfahren zur Herstellung von Spritzbeton und -mörtel unter Verwendung eines Zusatzmittels**
Process of manufacturing of sprayable concrete and morton by using an additive
Procédé de fabrication de béton et mortier projeté en utilisant un additif

(30) Priorität: 21.06.1991 CH 1848/91; 23.07.1991 CH 1848/91
(43) Veröffentlichungstag der Anmeldung: 23.12.1992
(73) Patentinhaber: Sika AG, vorm. Kaspar Winkler & Co., CH-8048 Zürich (CH)
(72) Erfinder: Bürge, Theodor A., CH-8954 Geroldswil (CH); Bracher, Gustav Dr., CH-8911 Rifferswil (CH); Mai, Dieter, CH-8865 Bilten (CH)
(74) Vertreter: Blum, Rudolf Emil Ernst

(56) Entgegenhaltungen:
- EP-A- 0 289 720
- WO-A-90/11977
- FR-A- 2 594 053
- GB-A- 2 020 722
- US-A- 2 313 107

## Beschreibung

Ziel der vorliegenden Erfindung war es, bei einem Verfahren zur Herstellung von Spritzbeton und -mörtel nach dem Trocken- oder Nassverfahren, die Staubbildung und den Rückprall zu vermindern. Unerwarteterweise zeigte es sich, dass die angestrebten Ziele durch Verwendung von Kieselsäuresol oder eines Zusatzmittels, das ein Kieselsäuresol enthält, erreicht werden können.

Kieselsäuresole sind bereits bekannt, und sie stellen wässrige, kolloidale Dispersionen von amorphem Siliciumdioxid (SiO₂) dar, in welchen das Siliciumdioxid in Form von untereinander unvernetzten, kugelförmigen Einzelpartikeln vorliegt, die an der Oberfläche Hydroxylgruppen tragen.

Bezüglich der physikalischen und chemischen Eigenschaften der Kieselsäuresole und der Verfahren zu deren Herstellung sei auf Ullmans Encyklopädie der technischen Chemie, 4. Auflage, Band 21, Seiten 456 - 458, verwiesen.

Es ist bereits bekannt, amorphes Siliciumdioxid als Pulver oder als wässrige Dispersion bei der Herstellung von Beton zuzusetzen, insbesondere um die Druckfestigkeit des Betons zu erhöhen und das Eindringen von wässrigen Lösungen in den Beton zu vermindern. Das amorphe Silicumdioxid wird dabei im allgemeinen als Mikrokieselsäure oder Silica fume eingesetzt, welches ein Nebenprodukt der Herstellung von Silicum und Siliciumlegierungen ist. Es handelt sich dabei um eine Flugasche, die aus an Elektrofiltern abgeschiedenen Teilchen aus rasch gekühlten Rauchgasen besteht. Diese Flugasche unterscheidet sich sowohl in der chemischen Zusammensetzung wie auch in der Teilchengrösse von den bisher als Zementzusatzmittel verwendeten Flugaschen aus thermischen Kraftwerken. So beträgt der Gehalt an SiO₂ in der Regel mehr als 80%, der verbrennbare Anteil liegt unter 1%. Das Material besteht aus amorphem Kieselglas, und unter dem Elektronenmikroskop ist die absolut kugelige Form der Partikel sichtbar. Der Durchmesser der Teilchen liegt unter 0,2 µm. Die spezifische Oberfläche, durch Adsorption nach Brunauer, Emmet und Teller bestimmt, liegt im allgemeinen zwischen 15 und 30 m²/g, in speziellen Fällen kann sie jedoch bis zu 400 m²/g betragen.

Es ist auch bereits bekannt, Silica fume bei der Herstellung von Spritzbeton und -mörtel zuzumischen um bessere Eigenschaften des Produktes zu erzielen. Um wirksam zu sein, muss Silica fume Pulver mit 5%-10% und Silica fume Slurry mit 10%-20%, berechnet auf das Zementgewicht, dem Spritzbeton oder -mörtel zugemischt werden.

Diese grossen Zusatzmengen erschweren sowohl die Lagerhaltung als auch den Transport, sowie die Zugabe zum Beton.

In der internationalen Patentveröffentlichung WO-A-90,11,977 wird ein Verfahren zur Beimischung von Siliziumdioxyd zu einem hydraulischen Zementbrei beschrieben, bei welchem zunächst eine Siliziumdioxyd enthaltende Mischung hergestellt wird, indem man
1. amorphe Kieselsäuren mit Teilchen, die kleiner sind als 1 Mikrometer, mit Wasser unter Ausbildung einer flüssigen Mikrokieselsäure vermischt und
2. Siliziumdioxydpulver einer grösseren Teilchengrösse von 2-200 Mikrometer in diese flüssige Mikrokieselsäure einmischt und
   die so erhaltene, festes Siliziumdioxyd enthaltende wässrige Mischung direkt dem Zementbrei im Mischtank zusetzt.

Die so erhaltenen hydraulischen Zementbreie sollen vorzugsweise als Bohrzement zur Auskleidung von Bohrlöchern auf Oelfeldern eingesetzt werden, wobei es wesentlich ist, dass die Zementierung hohen Temperaturen widerstehen kann.

Wie aus Seite 7, Zeilen 7-12 und Seite 9, Zeilen 15 und 26, sowie Seite 10, Zeilen 12 und 25 dieser Veröffentlichung zu ersehen ist, wird als flüssige Mikrokieselsäure vorzugsweise ein Silica fume enthaltendes Produkt eingesetzt, nämlich das Produkt, das von der Firma Elkem unter der Bezeichnung "Micro-silica" verkauft wird und welches einen Trockensubstanzgehalt von 50% aufweist. Die in dieser Veröffentlichung angestrebten Eigenschaften sind nur dann erzielbar, wenn in dem wässrigen Gemisch sowohl die sehr feinteilige Kieselsäure der Komponente 1 als auch die gröbere Kieselsäure der Komponente 2 enthalten ist. Der entsprechenden Veröffentlichung ist kein Hinweis auf die Verwendung eines Kieselsäuresols zu entnehmen.

Die europäische Patentveröffentlichung EP-A-289,720 betrifft ein Verfahren zur Auftragung einer Spritzbetonschicht, bei dem die zum Verspritzen der pumpbaren Mischung eingesetzte Treibluft mit einer synthetischen Kieselsäure einer inneren Oberfläche von mindestens 25 m²/g, beispielsweise einer inneren Oberfläche von 75-700 m²/g beladen wird. Somit erfolgt hier mittels der Treibluft die Zugabe eines trockenen Pulvers an Kieselsäure.

Auch in der französischen Patentveröffentlichung FR-A 2,594,053 wird ein Verfahren zur Herstellung von Spritzbeton beschrieben, bei dem feinteiliger Siliziumdioxydstaub der Treibluft zugesetzt wird.

Durch die Zugabe von pulverförmigem Silica fume wird die Staubbildung bei Verspritzen von Spritzbeton erhöht.

Bei der Zugabe eines wässrigen Breis von Silica fume bleibt sie im Vergleich zu einem Verspritzen ohne Zugabe dieses Zusatzes in etwa gleich. Bei der Verwendung eines Silica fume Slurrys erfolgt jedoch eine ausserordentlich starke Abrasion der Geräte, beispielsweise der Pumpen, der Dosiereinrichtung, der Spritzdüse und ähnlicher Teile der verwendeten Vorrichtungen.

Es wurde jetzt überraschenderweise gefunden, dass die erwähnten Nachteile, die mit der Zugabe von Silica fume in Form eines Pulvers oder eines Slurrys bei der Herstellung von Spritzbeton oder -mörtel verbunden sind, vermieden werden können, indem man statt dessen als Zusatzmittel ein Kieselsäuresol verwendet. Ueberraschenderweise zeigte es sich, dass durch die Verwendung eines Zusatzmittels, welches ein Kieselsäuresol enthält oder daraus besteht, bei der Verarbeitung von Spritzbeton und -mörtel nach dem Trocken- oder Nassverfahren die Staubbildung und der Rückprall vermindert und zudem die Festigkeit der aufgebrachten Schicht verbessert werden kann.

Ein Gegenstand der vorliegenden Erfindung ist dementsprechend die Verwendung von Kieselsäuresol oder eines Zusatzmittels, das ein Kieselsäuresol enthält, bei der Verarbeitung von Spritzbeton und -mörtel nach dem Trocken- oder Nassverfahren zur Verminderung der Staubbildung und des Rückpralls.

Ein weiterer Gegenstand der vorliegenden Erfindung ist ein Verfahren zur Herstellung von Spritzbeton und -mörtel nach dem Trocken- oder Nassverfahren, das dadurch gekennzeichnet ist, dass man zur Verminderung der Staubbildung und des Rückpralls bei der Verarbeitung ein Zusatzmittel zugibt, welches ein Kieselsäuresol enthält oder daraus besteht.

Es ist bekannt, dass Kieselsäuresole relativ unstabile Systeme sind und dass sie durch die Zugabe von Elektrolyten oder durch die Veränderung des pH-Wertes in ein Gel umgewandelt werden können. Es kann angenommen werden, dass die unerwarteten Vorteile bei der Zugabe der erfindungsgemässen Zusätze beim Verfahren zur Herstellung von Spritzbeton und- mörtel auf diese Gelbildung zurückzuführen sind.

Durch seine Instabilität und die ausserordentliche Feinheit bedingt, ist ein Kieselsäuresol hochreaktiv und es kann angenommen werden, dass es rasch mit dem Calciumhydroxyd, welches im Verlaufe der Hydratation des Zementes gebildet wird, reagiert. Spritzbeton und -mörtel weist einen hohen pH-Wert auf, der im allgemeinen in der Gegend von 13 liegt. Dieser hohe pH-Wert, im Zusammenhang mit der Anwesenheit von Calciumionen im Spritzbeton, beziehungsweise -mörtel, dürfte ebenfalls dazu beitragen, dass bei der Zugabe der erfindungsgemässen Zusätze sofort eine Gelierung der Kieselsäure auftritt.

Es ist bekannt, dass bei der Zugabe von normaler Flugasche zu Betonzusammensetzungen, eine Erhärtungsverzögerung zu beobachten ist. Ueberraschenderweise führen im Gegensatz dazu die erfindungsgemäss zu verwendenden Zusatzmittel auf Basis von Kieselsäuresol, zu keinerlei Erhärtungsverzögerungen bei der Zugabe zu Spritzbeton und -mörtel.

Es zeigte sich, dass bei der Herstellung von Spritzbeton und -mörtel unter der erfindungsgemässen Verwendung von Kieselsäuresol Feinanteile im Spritzbeton, beziehungsweise -mörtel, gebunden werden und somit eine erhebliche Verminderung der staubbildung erreicht wird.

Ein weiterer Vorteil, der durch die erfindungsgemässe Verwendung von Kieselsäuresol erreichbar ist, ist derjenige, dass die Klebrigkeit der einzelnen Teilchen erhöht wird. Dadurch wird es möglich, dass in einem Arbeitsgang extrem dicke Schichten, auch ohne Abbindebeschleuniger-Zusatz, aufgetragen werden können.

Bekanntlich kann Spritzbeton, entweder nach dem Nassverfahren oder nach dem Trockenverfahren, aufgetragen werden. Beim Nassverfahren wird eine Mischung von Zement mit Wasser vollständig mit allen Zusätzen auf die Tunnelwand oder auf eine andere Fläche mit Hilfe einer Düse aufgespritzt. Beim Trockenverfahren werden die Bestandteile trocken gemischt einer Düse zugeführt, welcher ebenfalls Wasser zugeleitet wird. Eine grössere Beschleunigung der Aushärtung wird im allgemeinen mit dem Trockenverfahren erreicht.

Beide Verfahren werden auch in der Beton- und Bauwerksanierung in vermehrtem Masse eingesetzt.

Aus praktischen Gründen, beispielsweise Einhaltung einer konstanten Qualität, hat sich in den letzten Jahren das Nassverfahren immer mehr durchgesetzt. Der fertig gemischte Beton oder Mörtel kann auf der Baustelle hergestellt oder ab einem Transportbetonwerk bezogen werden. Zur Erzielung einer guten Verarbeitbarkeit resp. Pumpbarkeit, sowie zur Sicherstellung einer eventuell notwendigen längeren Verarbeitungszeit, können bei der Herstellung allgemein bekannte Betonzusatzstoffe beigegeben werden. Zu diesen gehören Betonverflüssiger, Hochleistungsbetonverflüssiger, Verzögerer, Luftporenbildner und wässrige Polymerdispersionen.

Erfindungsgemäss verwendet man vorzugsweise Zusatzmittel, die ein wässriges Kieselsäuresol enthalten oder aus einem wässrigen Kieselsäuresol bestehen. Vorzugsweise hat das Kieselsäuresol eine Partikelgrösse im Bereich von 7 - 40 nm und eine spezifische Oberfläche von 50 - 700 m²/g, insbesondere 80 - 500 m²/g.

Die beim erfindungsgemässen Verfahren eingesetzten Zusatzmittel auf Basis von Kieselsäuresol weisen im allgemeinen einen Gehalt an Siliciumdioxid, bezogen auf das Trockengewicht, von 5 - 60 Gew.-%, insbesondere 15 - 50 Gew.-%, auf.

Bei dem erfindungsgemässen Verfahren zur Herstellung von Spritzbeton und -mörtel nach dem Trocken- oder Nassverfahren, erfolgt die Zugabe des Zusatzmittels unmittelbar vor oder während des Verspritzens des Spritzbetons oder -mörtels. Vorzugsweise wird das Zusatzsmittel in der Spritzdüse zugeführt, beispielsweise unter Verwendung einer Dosierpumpe.

Vorzugsweise wird das Zusatzmittel in einer Menge von 0,1 - 100 Gew.-%, insbesondere in einer Menge von 1 - 20 Gew.-%, bezogen auf das Gewicht des im Spritzbeton, bzw. Spritzmörtel, enthaltenen Bindemittels zugesetzt.

Die erfindungsgemäss zu verwendenden Zusatzmittel können solchen Spritzbetonzusammensetzungen, bzw. Spritzmörtelzusammensetzungen, zugegeben werden, die als weitere Komponente mindestens einen Bestandteil aus der Gruppe enthalten, welche die folgenden Bestandteile umfasst:

Betonverflüssiger, Hochleistungsverflüssiger, Abbindeverzögerer, Luftporenbildner und wässrige Polymerdispersionen. Das erfindungsgemässe Zusatzmittel kann auch mit einem oder mehreren der oben erwähnen Bestandteile vorgemischt werden.

Bei der Herstellung des Spritzbetons, beziehungsweise -mörtels, kann es vorteilhaft sein, zusätzlich zu dem Kieselsäuresol, einen pulverförmigen oder flüssigen Abbindebeschleuniger zuzusetzen, vorzugsweise unmittelbar vor oder während des Verspritzens des Spritzbetons. Flüssige Abbindebeschleuniger werden dabei vorzugsweise mit einer Dosierpumpe an der Spritzdüse zugesetzt. Erfolgt die Zugabe des Kieselsäuresols an der Spritzdüse mit Hilfe einer Dosierpumpe, dann wird der flüssige Abbindebeschleuniger dort im allgemeinen mit einer davon getrennten Dosierpumpe zugeführt.

Es zeigte sich, dass die kombinierte Zugabe des Kieselsauresols mit einem Abbindebeschleuniger zu besonders vorteilhaften Ergebnissen führt, weil Abbindebeschleuniger Elektrolyte sind und deshalb und auch aufgrund ihres pH-Wertes die Gelierung des Kieselsäuresols fördern. Die kombinierte Zugabe von Kieselsäuresol und Abbindebeschleuniger führt zu einer Erhöhung der Festigkeit der Schicht des aufgespritzten Spritzbetons.

Die Erfindung sei nun anhand von Beispielen näher erläutert.

In sämtlichen Beispielen wurde eine Mörtelmischung verwendet, die 1440 kg Sand 0-8 mm und 350 kg Portlandzement (Typ I) enthielt.

Die Abbindebeschleuniger auf Aluminatbasis waren Produkte der Markenbezeichnung "Sigunit" der SIKA AG. Die Abbindebeschleuniger wurden in den angegebenen Prozentsätzen, berechnet auf das Gewicht des in der Mörtelmischung anwesenden Portlandzementes, zugesetzt. In den Versuchen 1 und 4 wurden 5% des pulverförmigen Abbindebeschleunigers "SIGUNIT-Pulver" dem Trockengemisch beigegeben. In Versuch 2 wurden 5% des flüssigen Abbindebeschleunigers "SIGUNIT-L62" an der Spritzdüse zugesetzt.

Das erfindungsgemässe Zusatzmittel wurde bei den Versuchen 3 und 4 an der Spritzdüse zugesetzt.

Das in diesen Versuchen erfindungsgemäß eingesetzte Zusatzmittel war ein wässriges Kieselsäuresol mit einem Siliciumdioxidgehalt von 35 Gew.-%, bezogen auf das Sol. In den Versuchen 3 und 4 wurden 5 Gew.-% dieses 35%-igen Sols, bezogen auf das Zementgewicht, zugegeben.

Silica fume Pulver wurde dem Trockengemisch und Silica fume Slurry an der Spritzdüse zugegeben.

Zur Verwendung gelangte eine Betonspritzmaschine Type ALIVA 246, mit einem 3,6 l Rotor, einem Förderschlauch mit 38 mm Durchmesser und einer normalen Spritzdüse. Der Luftdruck betrug 2,5 bar. Während des Spritzens wurden Staubmessungen durchgeführt. Der Rückprall wurde aufgefangen und nach Abschluss des Versuches durch Wägen bestimmt.

Die Staubmessung erfolgte nach der Methode der Staubmessung im Bergbaubetrieb, Staubmessung und Probenahme mit dem Gerät MPG II der Firma Wazau, Berlin 36, Dresdnerstrasse 11.

Die Bestimmung des Rückpralls erfolgte vertikal und über Kopf (also beim Verspritzen an die Decke des Tunnels) und es wurde das auf den Boden gelangende Material auf Plastikfolien aufgefangen und gewogen.

Nach 24 Stunden wurden aus dem erhärteten Spritzmörtel Bohrkerne entnommen und nach verschiedenen Zeiten die Druckfestigkeit bestimmt.

Zusätzlich zu den Versuch 1 bis 4 wurden weitere Versuche durchgeführt, indem statt des Kieselsäuresols, beziehungsweise statt des Abbindebeschleunigers, 15% eines 50%igen Silica fume Slurries, beziehungsweise 12% an Silica fume Pulver zugegeben wurde. Die bei diesen Versuchen und den Versuchen 1 bis 4 erhaltenen Werte sind in den nachfolgenden Tabellen zusammengestellt:

**Tabelle I**

| Staubbildung | |
|---|---|
| | Feinstaub 5 µm in mg/m³ Luft |
| Versuch 1 | 8,4 |
| 2 | 6,1 |
| 3 | 2,4 |
| 4 | 3,4 |
| Silica fume Slurry (15% Dosierung) | 6,7 |

**Tabelle II**

| Rückprall | | |
|---|---|---|
| | Gew.-% des gespritzten Materials | |
| | Vertikal | über Kopf |
| Versuch 1 | 12 | 23 |
| 2 | 11 | 22 |
| 3 | 2 | 5 |
| 4 | 3 | 5 |
| Silica fume Pulver (12% Dosierung) | 16 | 31 |
| Silica fume Slurry (15% Dosierung) | 9 | 18 |

**Tabelle III**

| Bestimmung der Druckfestigkeit, 24 Stunden, bzw. 7 Tage nach dem Verspritzen | | |
|---|---|---|
| | MPa nach | |
| | 1 Tag | 7 Tagen |
| Versuch 1 | 18,6 | 25,8 |
| 2 | 22,0 | 29,7 |
| 3 | 20,9 | 33,0 |
| 4 | 24,1 | 41,9 |
| Silica fume Slurry (15% Dosierung) | 18,4 | 40,1 |

Aus den in den Tabellen I und II angegebenen Werten sieht man, dass mit dem pulverförmigen, beziehungsweise flüssigen Abbindebeschleuniger wesentlich mehr Staub gebildet wird und der Rückprall viel höher ist, als bei der Zugabe der erfindungsgemässen Zusätze auf Basis von Kieselsäuresol. Die kombinierte Zugabe des erfindungsgemässen Zusatzes mit dem gleichen pulverförmigen Abbindebeschleuniger führt jedoch zu sehr guten Werten.

Aus Tabelle I und Tabelle II sieht man ferner, dass Silica fume, zugesetzt als Pulver oder als Slurry, nicht in der Lage ist, die Staubbildung oder den Rückprall zu vermindern und somit eine völlig andersartige Wirkung zeigt, als das erfindungsgemässe Zusatzmittel auf Basis von Kieselsäuresol.

Die Ergebnisse der Tabelle III zeigen ferner, dass bei der alleinigen Zugabe von Kieselsäuresol, bessere Druckfestigkeiten erzielt werden, als bei der alleinigen Zugabe des pulverförmigen Abbindebeschleunigers, und zwar sowohl bei der Bestimmung nach einem Tag als auch bei der Bestimmung nach sieben Tagen. Ein Vergleich mit dem flüssigen Abbindebeschleuniger zeigt ferner, dass der erfindungsgemässe Zusatz auf Basis von Kieselsäuresol, nach sieben Tagen auch eine höhere Druckfestigkeit liefert, als der flüssige Abbindebeschleuniger nach sieben Tagen.

Die besten Ergebnisse bezüglich der Druckfestigkeit nach einem Tag und nach sieben Tagen, werden durch die kombinierte Zugabe an pulverförmigem Beschleuniger plus erfindungsgemässem Zusatz auf Basis von Kieselsäuresol erzielt.

## Patentansprüche

1. Verfahren zur Herstellung von Spritzbeton und -mörtel nach dem Trocken- oder Nassverfahren, dadurch gekennzeichnet, dass man zur Verminderung der Staubbildung und des Rückpralls bei der Verarbeitung ein Zusatzmittel zugibt, welches ein Kieselsäuresol enthält oder daraus besteht.

2. Verfahren nach Anspruch 1,dadurch gekennzeichnet, dass das Kieselsäuresol des Zusatzmittels eine Partikelgrösse im Bereich von 7 bis 50 nm und eine spezifische Oberfläche von 50 bis 700 m²/g, insbesondere 50 bis 500 m²/g, aufweist.

3. Verfahren nach Anspruch 1 oder 2, dadurch gekennzeichnet, dass das Zusatzmittel einen Gehalt an Siliciumdioxid, bezogen auf das Trockengewicht, von 5 bis 60 Gew.-%, insbesondere 15 bis 50 Gew.-%, aufweist.

4. Verfahren nach einem der Ansprüche 1-3, dadurch gekennzeichnet, dass das im Zusatzmittel enthaltene Kieselsäuresol ein wässriges Kieselsäuresol ist.

5. Verfahren nach einem der Ansprüche 1-4, dadurch gekennzeichnet, dass die Zugabe des Zusatzmittels unmittelbar vor oder während des Verspritzens des Spritzbetons oder- mörtels erfolgt und dass das Zusatzmittel vorzugsweise in der Spritzdüse zugeführt wird, beispielsweise mit einer Dosierpumpe.

6. Verfahren nach einem der Ansprüche 1 bis 5, dadurch gekennzeichnet, dass man das Zusatzmittel in einer Menge von 0,1 bis 100 Gew.-%, bezogen auf das Gewicht des im Spritzbeton, beziehungsweise Spritzmörtel, enthaltenen Bindemittels zusetzt.

7. Verfahren nach einem der Ansprüche 1 bis 6, dadurch gekennzeichnet, dass man das Zusatzmittel einem Spritzbeton, bzw. Spritzmörtel, zusetzt, der als weitere Komponente mindestens einen Bestandteil aus der Gruppe enthält, welche die folgenden Bestandteile umfasst:
Betonverflüssiger, Hochleistungsbetonverflüssiger, Abbindeverzögerer, Luftporenbildner und wässrige Polymerdispersionen.

8. Verfahren nach einem der Ansprüche 1 bis 7, dadurch gekennzeichnet, dass man das Zusatzmittel vermischt mit mindestens einer weiteren Komponente zusetzt, welche ausgewählt ist aus der Gruppe umfassend:
Betonverflüssiger, Hochleistungsbetonverflüssiger, Abbindeverzögerer, Luftporenbildner und wässrige Polymerdispersionen.

9. Verfahren nach einem der Ansprüche 1 bis 8, dadurch gekennzeichnet, dass man bei der Herstellung des Spritzbetons und -mörtels ausserdem einen pulverförmigen oder flüssigen Abbindebeschleuniger zusetzt, vorzugsweise unmittelbar vor oder während des Verspritzens des Spritzbetons.

10. Verfahren nach einem der Ansprüche 1 bis 9, dadurch gekennzeichnet, dass man das Zusatzmittel mit einer Dosierpumpe an der Spritzdüse zuführt, und dass bei Verwendung eines flüssigen Abbindebeschleunigers dieser mit einer getrennten Dosierpumpe, ebenfalls an der Spritzdüse, zugeführt wird.

11. Verwendung von Kieselsäuresol oder eines Zusatzmittels, das ein Kieselsäuresol enthält, bei der Verarbeitung von Spritzbeton und -mörtel nach dem Trocken- oder Nassverfahren zur Verminderung der Staubbildung und des Rückpralls.

12. Verwendung nach Anspruch 11, dadurch gekennzeichnet, dass man ein Zusatzmittel einsetzt, in welchem das Kieselsäuresol eine Partikelgrösse im Bereich von 7 bis 50 nm und eine spezifische Oberfläche von 50 bis 700 m²/g, insbesondere 50 bis 500 m²/g, aufweist.

13. Verwendung nach Anspruch 11 oder 12, dadurch gekennzeichnet, dass man ein Zusatzmittel einsetzt, das einen Gehalt an Siliciumdioxid, bezogen auf das Trockengewicht, von 5 bis 60 Gew.-%, insbesondere 15 bis 50 Gew.-%, aufweist.

14. Verwendung nach einem der Ansprüche 11 bis 13, dadurch gekennzeichnet, dass man ein Zusatzmittel einsetzt, in welchem das Kieselsäuresol ein wässriges Kieselsäuresol ist.

## Claims

1. Method for the manufacturing of sprayed concrete and -mortar according to the dry- or wet spraying process, characterized in that, for the diminution of the dust formation and the repercussion, an additive is added during the processing, containing a sol of silicic acid or consisting thereof.

2. Method according to claim 1 characterized in that the sol of silicic acid of the additive is displaying a particle size in the range of 7 to 50 nm and a specific surface of 50 to 700 m²/g, particulary 50 to 500 m²/g.

3. Method according to claim 1 or 2, characterized in that the additive is displaying a content of silicium dioxide based on the dry weight, of 5 to 60% per weight, particularly 15 to 50 % per weight.

4. Method according to one of the claims 1-3, characterized in that the sol of silicic acid included in the additive is an aqueous sol of silicic acid.

5. Method according to one of the claims 1-4, characterized in that the addition of the addditive is performed immediately before or during the spraying of the sprayed concrete or -mortar and that the additive is preferably conducted into the injection nozzle, for example by means of a dosage pump.

6. Method according to one of the claims 1-5, characterized in that the additive is added in a quantity of 0,1 to 100 % per weight, based on the weight of the binder contained in the sprayed concrete or sprayed mortar respectively.

7. Method according to one of the claims 1-6, characterized in that the additive is added to a sprayed concrete or sprayed mortar which is containing as a further component at least one of the ingredients from the group which is comprising the following ingredients:
concrete plasticizers, superplasticizers, setting retarders, air entraining agents and aqueous polymer dispersions.

8. Method according to one of the claims 1-7, characterized in that the additive is mixed and added with at least one further component which is selected from the group comprising:
concrete plasticizers, superplasticizers, setting retarders, air entraining agents and aqueous polymer dispersions.

9. Method according to one of the claims 1-8, characterized in that for the manufacturing of the sprayed concrete and -mortar, furthermore a powderlike or liquid setting accelerator is added, preferably immediately before or during the spraying of the sprayed concrete.

10. Method according to one of the claims 1 to 9, characterized in that the additive is conducted to the injection nozzle by means of a dosage pump and that in case of the use of a liquid setting accelerator, the latter is conducted to the injection nozzle by means of a separate dosage pump.

11. Use of a sol of silicic acid or an additive containing a sol of silicic acid for the processing of sprayed concrete and -mortar according to the dry- or wet spraying process for the diminution of the dust formation and the repercussion.

12. Use according to claim 11, characterized in that an additive is employed in which the sol of silicic acid is displaying a particle size in the range of 7 to 15 nm and a specific surface of 50-700 m²/g, particularly 50-500 m²/g.

13. Use according to claim 11 or 12, characterized in that an additive is employed which is displaying a content of silicium dioxide, based on the dry weight, of 5-60 % per weight, particularly 15-50 % per weight.

14. Use according to one of the claims 11 to 13, characterized in that an additive is employed in which the sol of silicic acid is an aqueous sol of silicic acid.

## Revendications

1. Procédé pour la fabrication de béton et de mortier de projection par le procédé par voie sèche ou le procédé par voie humide, caractérisé en ce que pour réduire la formation de poussière et les rebonds, on ajoute lors du traitement un agent d'addition qui contient un sol d'acide silicique ou est constitué de celui-ci.

2. Procédé selon la revendication 1, caractérisé en ce que le sol d'acide silicique de l'agent d'addition présente une granulométrie dans la plage de 7 à 50 nm et une surface spécifique de 50 à 700 m²/g, en particulier de 50 à 500 m²/g.

3. Procédé selon la revendication 1 ou 2, caractérisé en ce que l'agent d'addition présente une teneur en dioxyde de silicium, calculée sur le poids sec, de 5 à 60% en poids, en particulier de 15 à 50% en poids.

4. Procédé selon l'une quelconque des revendications 1-3, caractérisé en ce que le sol d'acide silicique contenu dans l'agent d'addition est un sol aqueux d'acide silicique.

5. Procédé selon l'une quelconque des revendications 1-4, caractérisé en ce que l'addition de l'agent d'addition s'effectue immédiatement avant ou pendant la projection du béton ou du mortier de projection, et en ce que l'agent d'addition est de préférence apporté au niveau du gicleur de projection, par exemple par une pompe doseuse.

6. Procédé selon l'une quelconque des revendications 1 à 5, caractérisé en ce que l'on ajoute l'agent d'addition en quantité de 0,1 à 100% en poids, calculés sur le poids de l'agent liant contenu dans le béton de projection ou dans le mortier de projection.

7. Procédé selon l'une quelconque des revendications 1 à 6, caractérisé en ce que l'on ajoute l'agent d'addition à un béton de projection ou un mortier de projection qui contient comme autres composants au moins un membre du groupe qui contient les composants suivants:
un fluidifiant du béton, un fluidifiant de haute capacité du béton, un retardeur de prise, un agent de formation de pore d'air et des dispersions aqueuses de polymère.

8. Procédé selon l'une quelconque des revendications 1 à 7, caractérisé en ce que l'on ajoute l'agent d'addition mélangé avec au moins un autre composant qui est sélectionné dans le groupe comprenant:
des fluidifiants du béton, des fluidifiants à haute capacité du béton, des ralentisseurs de prise, des agents de formation de pore d'air et des dispersions aqueuses de polymère.

9. Procédé selon l'une quelconque des revendications 1 à 8, caractérisé en ce que lors de la fabrication du béton et du mortier de projection, on ajoute en outre un accélérateur de prise pulvérulent ou liquide, de préférence immédiatement avant ou pendant la projection du béton de projection.

10. Procédé selon l'une quelconque des revendications 1 à 9, caractérisé en ce que l'on ajoute l'agent d'addition au niveau du gicleur de projection à l'aide d'une pompe doseuse, et en ce que lorsque l'on utilise un accélérateur de prise liquide, celui-ci est amené également au niveau du gicleur de projection, par une pompe doseuse séparée.

11. Utilisation d'un sol d'acide silicique ou d'un agent d'addition qui contient un sol d'acide silicique lors du traitement de béton et de mortier de projection par le procédé par voie sèche ou le procédé par voie humide, en vue de la réduction de la formation de poussière et des rebonds.

12. Utilisation selon la revendication 11, caractérisée en ce que l'on utilise un agent d'addition dans lequel le sol d'acide silicique présente une granulométrie dans la plage de 7 à 50 nm et une surface spécifique de 50 à 700 m²/g, en particulier de 50 à 500 m²/g.

13. Utilisation selon la revendication 11 ou 12, caractérisée en ce que l'on utilise un agent d'addition qui présente une teneur en dioxyde de silicium, calculée sur le poids sec, de 5 à 60% en poids, en particulier de 15 à 50% en poids.

14. Utilisation selon l'une quelconque des revendications 11 à 13, caractérisée en ce que l'on utilise un agent d'addition dans lequel le sol d'acide silicique est un sol aqueux d'acide silicique.
